# EUROPEAN PATENT SPECIFICATION

(11) **EP 3 118 077 B1**
(45) Date of publication and mention of the grant of the patent: **16.06.2021**
(21) Application number: 15176839.7
(22) Date of filing: 15.07.2015
(51) Int. Cl.: B60T 15/18, B60T 15/02

(54) **RELAY VALVE AND METHOD OF CONTROLLING A RELAY VALVE**
RELAISVENTIL UND VERFAHREN ZUR STEUERUNG EINES RELAISVENTILS
SOUPAPE DE RELAIS ET PROCÉDÉ DE COMMANDE D'UNE SOUPAPE DE RELAIS

(43) Date of publication of application: 18.01.2017
(73) Proprietor: KNORR-BREMSE Systeme für Nutzfahrzeuge GmbH, 80809 München (DE)
(72) Inventor: Zéman, Ferenc, 1114 Budapest (HU)

(56) References cited:
- US-A- 5 312 167
- US-B1- 6 209 582

## Description

The present invention relates to a relay valve, in particular a proportional relay valve to be used in compressed-air brake systems of commercial vehicles. The present invention also relates to a method of controlling such a relay valve.

In conventional pneumatic systems, relay valves are extensively used to provide control of high airflow output pressure proportional to a low airflow control pressure. The modulation of the output pressure is realized by the modulation of the control pressure. EP 2 407 355 B1 discloses a relay valve comprising an additional elastic element for causing offset and increased factor of the outlet pressure in relation to the control pressure. EP 1 391 363 A1 shows a proportional relay valve design providing delayed control of the piston resulting in an increased dynamic of output pressure.

Further, US 6 209 582 B1 discloses a control valve assembly comprising a valve member acting as a valve or a piston, on which the preamble of claims 1 and 9 is based.

It is the object of the present invention to provide a relay valve comprising improved possibilities to modulate an output pressure.

This object is achieved by the teaching of the independent claims. Advantageous configurations of the invention are defined in the dependent claims.

The inventive relay valve comprises a control piston arranged in a housing and being axially movable by means of a control pressure supplied from a control port; a valve means comprising a valve body being axially movable by means of an axial movement of said control piston, wherein the valve body controls fluid connection between a supply port and an outlet port; and a movement limiting mechanism configured to limit axial movement range of the control piston if required. Further, the movement limiting mechanism comprises an adjusting element configured to adjust axial movement range limitation of the control piston.

The inventive method of controlling a relay valve comprising a control piston arranged in a housing and being axially movable by means of a control pressure supplied from a control port, and a valve means comprising a valve body being axially movable by means of an axial movement of the control piston, wherein the valve body controls fluid connection between a supply port and an outlet port, comprises the step of limiting an axial movement range of the control piston by means of a movement limiting mechanism if required. Further, limits of the axial movement range of the control piston are adjusted.

The relay valve according to the present invention comprises a movement limiting mechanism configured to limit an axial movement range of the control piston if required. As a result, it is possible to modulate the output pressure of the relay valve not only by modifying the control pressure but also by controlling a mechanism, i.e. the movement limiting mechanism, incorporated into the relay valve. Preferably, the outlet pressure range may be limited from low side and/or high side irrespective of the actually supplied control pressure.

For example, if pressure is required to be limited from high side, the limited outlet pressure shall be set by the control pressure and the movement limiting mechanism shall be locked in the actual state in order to inhibit opening of an inlet valve seat of the valve means. In this condition, further pressure increase won't occur even if the control pressure is increased. On the other hand, the outlet pressure can be decreased or cannot be decreased if the control pressure is decreased, depending on the movement possibility of the control piston relative to the movement limiting mechanism. Further, for example, if pressure is required to be limited from low side, the limited outlet pressure shall be set by the control pressure and the movement limiting mechanism shall be locked in the actual state in order to inhibit opening of an outlet valve seat of the valve means. In this condition, further pressure decrease won't occur even if the control pressure is decreased. On the other hand, the outlet pressure can be increased or cannot be increased if the control pressure is decreased, depending on the movement possibility of the control piston relative to the movement limiting mechanism.

In this way it is also possible to limit the outlet pressure of the relay valve from both sides in the same time if the movement possibility of the control piston relative to the movement limiting mechanism is zero. In this case, the low and high limits are the same pressure value.

In a preferred configuration of the invention, the movement limiting mechanism may be configured to limit axial movement range of the control piston in the one direction and/or the other direction.

Preferably, the adjusting element of the movement limiting mechanism is configured lockable or self-locking.

In a preferred configuration of the invention, the adjusting element of the movement limiting mechanism may be driven and locked by a driving device. This driving device preferably comprises an electric motor.

In this configuration, the movement limiting mechanism preferably comprises a movement limiting element, and the movement limiting element preferably provides a stroke of movement of the control piston relative to the movement limiting element being at least equal to a full stroke of axial movement of the control piston.

In another preferred configuration of the invention, the adjusting element of the movement limiting mechanism may be driven by the control piston and locked by a locking device. This locking device preferably comprises an electromagnetic or air-pressure controlled locking mechanism.

In this configuration, the movement limiting mechanism preferably comprises a movement limiting element, and the movement limiting element preferably provides a stroke of movement of the control piston relative to the movement limiting element being half of a full stroke of axial movement of the control piston at maximum.

The relay valve of the present invention may preferably be used in compressed-air brake systems, in particular compressed-air brake systems for commercial vehicles.

In a preferred configuration of the invention, the movement limiting mechanism may comprise a movement limiting element. For setting the actual output pressure as a low limit, after a desired output pressure is reached, the movement limiting element is moved to a position where the control piston is in middle position and the control piston is abutting a side of the movement limiting element facing to an outlet valve seat of the relay valve. For setting the actual output pressure as a high limit, after a desired output pressure is reached, the movement limiting element is moved to a position where the control piston is in middle position and the control piston is abutting a side of the movement limiting element facing to an inlet valve seat of the relay valve.

The above as well as further advantages, features and possible applications of the invention will become more apparent from the following description of an example embodiment in conjunction with the accompanying drawings, in which:
- Fig. 1: is a schematic view of a relay valve according to an embodiment of the present invention in an unlimited mode;
- Fig. 2: is a schematic view of the relay valve of Figure 1 in a limitation from high side mode;
- Fig. 3: is a schematic view of the relay valve of Figure 1 in a limitation from low side mode;
- Fig. 4: is a schematic view of the relay valve of Figure 1 in a high limitation mode; and
- Fig. 5: is a schematic view of the relay valve of Figure 1 in a low limitation mode.

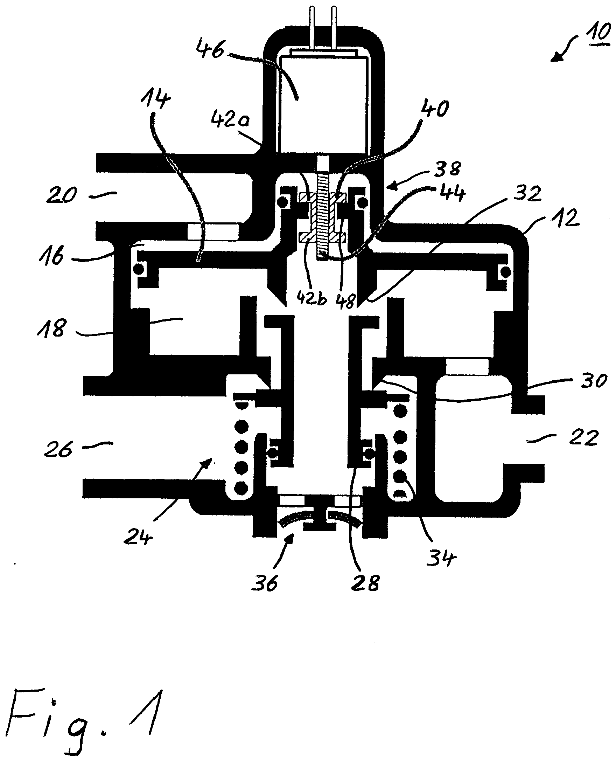

Fig. 1 shows a relay valve 10 according to an embodiment of the present invention. The relay valve 10 of this configuration may be used e.g. in compressed-air brake systems of commercial vehicles.

The relay valve 10 comprises a housing 12. In this housing 12, a control piston 14 is arranged such that it is axially (i.e. up and down direction in Figure 1) movable within the housing 12. A control chamber 16 is provided on one side of (in Figure 1: above) the control piston 14, wherein this control chamber 16 is connected to a control port 20. An outlet chamber 18 is provided on the other side of (in Figure 1: below) the control piston 14, wherein this outlet chamber 18 is connected to an outlet port 22.

Further, the relay valve 10 includes a valve means 24. This valve means 24 controls fluid connection between a supply port 26 and the outlet port 22 of the relay valve 10. In this embodiment, the valve means 24 comprises a valve body 28 which is arranged in the housing 12 such that it is movable in an axial direction (up and down direction in Figure 1). An inlet valve seat 30 is provided on the housing 12, and an outlet valve seat 32 is provided on the control piston 14. When the valve body 28 is abutting the inlet valve seat 30 (condition shown in Figure 1) the valve means 24 closes fluid connection between the supply port 26 and the outlet port 22 of the relay valve 10. In addition, an elastic element 34, e.g. a spring, is provided to bias the valve body 28 in direction towards the inlet valve seat 30 (in Figure 1: upwards).

When a control pressure is supplied to the control port 20 of the relay valve 10, the control pressure reaches the control chamber 16 and acts on the control piston 14 to axially move the control piston 14 downwards. When moving downwards, the outlet valve seat 32 of the control piston 14 may finally come into contact with the valve body 28. When further moving downwards, the control piston 14 presses the valve body 28 downwards, against the spring force of the elastic element 34. In this way, the valve body 28 is moved away from the inlet valve seat 30 so that the valve means 24 is opened and fluid connection between the supply port 26 and the outlet port 22 of the relay valve 10 is established.

As shown in Fig. 1, the valve means 24 of the relay valve 10 is also connected to an exhaust 36.

According to the present invention, the relay valve 10 further comprises a movement limiting mechanism 38. In this embodiment, the movement limiting mechanism 38 comprises a movement limiting element 40 having a first (upper) stopper 42a and a second (lower) stopper 42b, an adjusting element 44 comprising a threaded shaft, and a driving device 46 comprising an electric motor. The movement limiting element 40 has an internal thread engaging with the threaded shaft. The control piston 14 is provided with a projection 48 which engages with the movement limiting element 40 of the movement limiting mechanism 38.

The driving device 46 is driving the threaded shaft of the adjusting element 44 to rotate, if required. While rotating, the threaded shaft moves the movement limiting element 40 in an axial direction. Thereby, a movement range of the control piston 14 within the housing 12 can be adjusted. In this configuration with the adjusting element 44 comprising the threaded shaft, the movement limiting element 40 being engaged with this adjusting element 44 is self-locking at the desired height position by means of this self-locking transmission.

When the height position of the movement limiting element 40 is adjusted and locked, the axial movement range of the control piston 14 is limited. In this embodiment where the movement limiting element 40 has a first and a second stopper 42a, 42b, the axial movement range of the control piston 14 is limited in both directions (upwards and downwards in Figure 1). Especially, the upward movement of the control piston 14 is stopped when the projection 48 of the control piston 14 abuts against the first (upper) stopper 42a of the movement limiting element 40, and the downward movement of the control piston 14 is stopped when the projection 48 of the control piston 14 abuts against the second (lower) stopper 42b of the movement limiting element 40.

In principle, it is also possible to use movement limiting elements having only one (upper or lower) stopper to limit the movement range of the control piston 14 in only one (upwards or downwards) direction.

The axial distance between the first and second stoppers 42a, 42b of the movement limiting element 40 determines a stroke of the movement of the control piston 14 relative to the movement limiting element 40 of the movement limiting mechanism 38. In this configuration with the driving device 46 comprising the electric motor and the adjusting element 44 comprising the threaded shaft, that relative stroke provided by the movement limiting mechanism 38 is preferably essentially equal to the full stroke of the control piston 14 in the housing 12 at minimum, and essentially three times the full stroke of the control piston 14 at maximum.

In other embodiments of the present invention, the movement limiting element 40 of the movement limiting mechanism 38 may be moved by the control piston 14 and may be locked mechanically, by an electromagnetic locking mechanism or by an air-pressure controlled locking mechanism. In such a configuration, the relative stroke provided by the movement limiting mechanism 38 is preferably in the range between zero and the half of the full stroke of the control piston 14 in the housing 12.

With the embodiment shown in Figure 1, the position of the movement limiting element 40 of the movement limiting mechanism 38 can be adjusted continuously by means of the threaded shaft 44. In other embodiments, the position of the movement limiting element 40 may be adjusted in predetermined discrete positions.

The relay valve 10 explained above can be operated in different modes. Especially, the operation mode of the relay valve 10 is determined by the condition of the movement limiting mechanism 38, i.e. the adjusted position of the movement limiting element 40. The different modes of operation will now be explained in more detail with reference to Figures 1 to 5. Figure 1 illustrates the "unlimited mode". In this unlimited mode, the movement limiting element 40 is set in its middle position. The control piston 14 of the relay valve 10 can move freely as in a conventional relay valve. In this way, the relay valve 10 can be used for proportional control as a conventional relay valve.

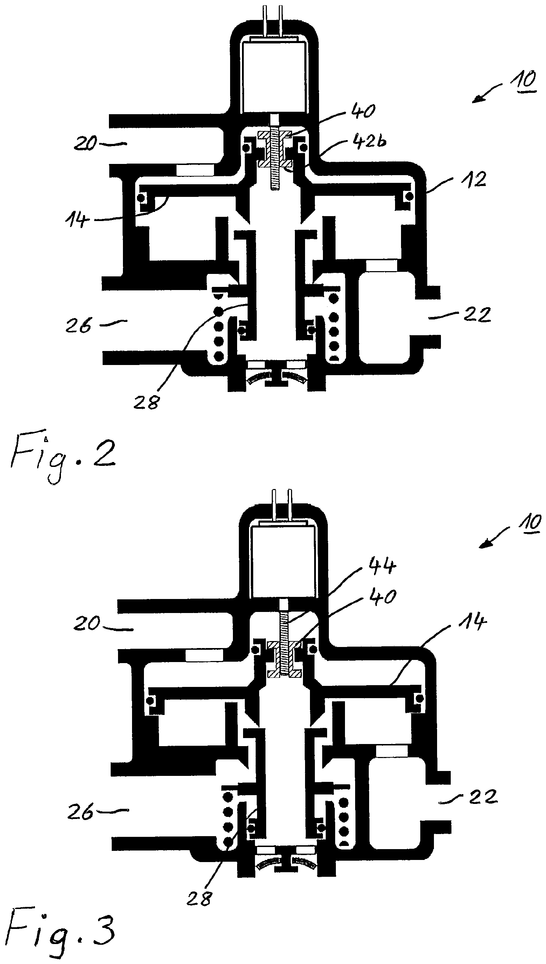

Figure 2 illustrates a "limitation from high side mode". In this mode, the movement limiting element 40 of the movement limiting mechanism 38 is set in its upper position. The control piston 14 of the relay valve 10 is held in the upper position even if the control port 20 of the relay valve 10 is pressurized. As a result, the outlet port 22 of the relay valve 10 will be kept unpressurized irrespective of the control pressure.

Figure 3 illustrates a "limitation from low side mode". In this mode, the movement limiting element 40 is set in its lower position. The control piston 14 of the relay valve 10 is held in the lower position even if the control port 20 of the relay valve 10 is unpressurized. As a result, the outlet port 22 of the relay valve 10 will be kept pressurized irrespective of the control pressure, at least as far as sufficient supply pressure is available at the supply port 26.

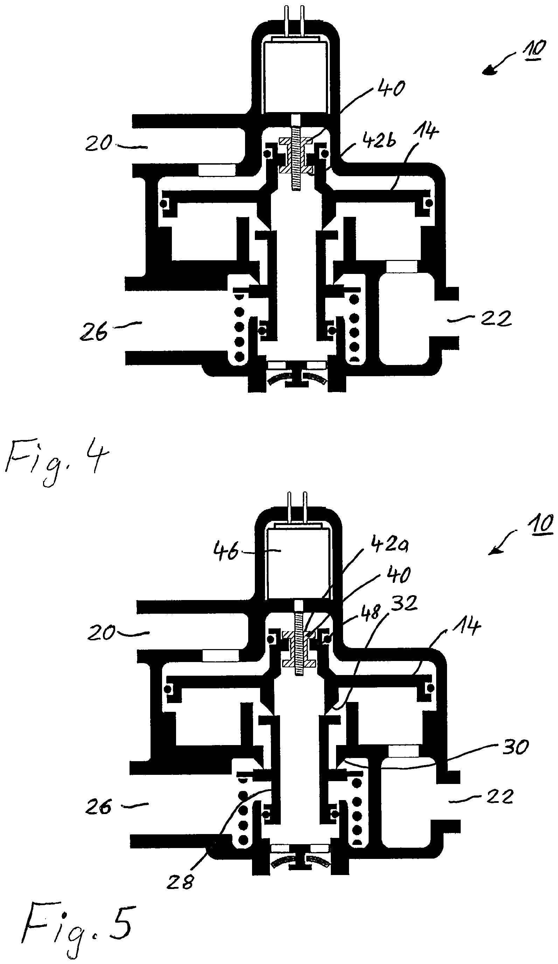

A "high limitation mode" is shown in Figure 4. In this mode, the movement limiting element 40 of the movement limiting mechanism 38 is adjusted in a middle position. The desired output pressure at the outlet port 22 is set by modulation of the control pressure at the control port 20. During supply of the control pressure at the control port 20, the second stopper 42b of the movement limiting element 40 is pushed against the projection 48 of the control piston 14 from the bottom side. As a result, opening the valve means 24 is avoided. As long as the movement limiting element 40 is kept in place, the pressure can be controlled only below the limited pressure level.

A "low limitation mode" is shown in Figure 5. In this mode, the movement limiting element 40 is set in a middle position. The desired output pressure is set by modulation of the control pressure at the control port 20. Whilst the pressure is set, the first stopper 42a of the movement limiting element 40 is pushed against the projection 48 of the control piston 14 from the upper side. As a result, opening the exhaust 36 is avoided. As long as the movement limiting element 40 is kept in place, the pressure can be controlled only above the limited pressure level.

Depending on the needs, the relay valve 10 of the present invention may be realized in different ways. In particular, it is possible to lock the relay valve 10, i.e. its control piston 14, in the exhausted position, in the inflated position, or in both exhausted and inflated positions. For example, the movement limiting element 40 of the movement limiting mechanism 38 may comprise only the first upper stopper 42a, only the second lower stopper 42b, or both first and second stoppers 42a, 42b.

## Claims

1. A relay valve (10), comprising:
a control piston (14) arranged in a housing (12) and being axially movable by means of a control pressure supplied from a control port (20);
a valve means (24) comprising a valve body (28) being axially movable by means of an axial movement of said control piston (14), wherein said valve body (28) controls fluid connection between a supply port (26) and an outlet port (22); and
a movement limiting mechanism (38) configured to limit axial movement range of said control piston (14) if required,
**characterized in that**
said movement limiting mechanism (38) comprises an adjusting element (44) configured to adjust axial movement range limitation of said control piston (14).

2. The relay valve according to claim 1, wherein
said movement limiting mechanism (38) is configured to limit axial movement range of said control piston (14) in the one direction and/or the other direction.

3. The relay valve according to claim 1 or 2, wherein
said adjusting element (44) of said movement limiting mechanism (38) is configured lockable or self-locking.

4. The relay valve according to any one of claims 1 to 3, wherein
said adjusting element (44) of said movement limiting mechanism (38) is driven and locked by a driving device (46) which driving device preferably comprises an electric motor.

5. The relay valve according to claim 4, wherein
said movement limiting mechanism (38) comprises a movement limiting element (40); and
said movement limiting element (40) provides a stroke of movement of said control piston (14) relative to said movement limiting element (40) being at least equal to a full stroke of axial movement of said control piston (14).

6. The relay valve according to any one of claims 1 to 3, wherein
said adjusting element (44) of said movement limiting mechanism (38) is driven by said control piston (14) and locked by a locking device which locking device preferably comprises an electromagnetic or air-pressure controlled locking mechanism.

7. The relay valve according to claim 6, wherein
said movement limiting mechanism (38) comprises a movement limiting element (40); and
said movement limiting element (40) provides a stroke of movement of said control piston (14) relative to said movement limiting element (40) being half of a full stroke of axial movement of said control piton (14) at maximum.

8. A compressed-air brake system, in particular for a commercial vehicle, comprising at least one relay valve (10) according to any one of preceding claims.

9. A method of controlling a relay valve (10) comprising a control piston (14) arranged in a housing (12) and being axially movable by means of a control pressure supplied from a control port (20), and a valve means (24) comprising a valve body (28) being axially movable by means of an axial movement of said control piston (14), wherein said valve body (28) controls fluid connection between a supply port (26) and an outlet port (22), comprising the step of:
limiting axial movement range of said control piston (14) by means of a movement limiting mechanism (38) if required,
**characterized in that**
limits of the axial movement range of said control piston (14) are adjusted.

10. The method according to claim 9, wherein
an axial movement range of said control piston (14) is limited in the one direction and/or the other direction.

11. The method according to claim 9 or 10, wherein
said movement limiting mechanism (28) comprises a movement limiting element (40); and
after a desired output pressure is reached, said movement limiting element (40) is moved to a position where said control piston (14) is in middle position and said control piston (14) is abutting a side of said movement limiting element (40) facing to an outlet valve seat (32) of said relay valve (10), for setting the actual output pressure as a low limit.

12. The method according to any one of claims 9 to 11, wherein
said movement limiting mechanism (28) comprises a movement limiting element (40); and
after a desired output pressure is reached, said movement limiting element (40) is moved to a position where said control piston (14) is in middle position and said control piston (14) is abutting a side of said movement limiting element (40) facing to an inlet valve seat (30) of said relay valve (10), for setting the actual output pressure as a high limit.

## Patentansprüche

1. Relaisventil (10), Folgendes umfassend:
einen Steuerkolben (14), der in einem Gehäuse (12) angeordnet und mittels eines von einem Steueranschluss (20) zugeführten Steuerdrucks axial beweglich ist;
eine Ventileinrichtung (24), die einen Ventilkörper (28) umfasst, der über eine Axialbewegung des Steuerkolbens (14) beweglich ist, wobei der Ventilkörper (28) die Fluidverbindung zwischen einem Zuführanschluss (26) und einem Auslassanschluss (22) steuert; und
einen Bewegungseinschränkungsmechanismus (38), der dazu ausgelegt ist, den axialen Bewegungsbereich des Steuerkolbens (14) gegebenenfalls einzuschränken,
**dadurch gekennzeichnet, dass**
der Bewegungseinschränkungsmechanismus (38) ein Einstellelement (44) umfasst, das dazu ausgelegt ist, die Einschränkung des axialen Bewegungsbereichs des Steuerkolbens (14) einzustellen.

2. Relaisventil nach Anspruch 1, wobei
der Bewegungseinschränkungsmechanismus (38) dazu ausgelegt ist, den axialen Bewegungsbereich des Steuerkolbens (14) in die eine Richtung und/oder die andere Richtung einzuschränken.

3. Relaisventil nach Anspruch 1 oder 2, wobei
das Einstellelement (44) des Bewegungseinschränkungsmechanismus (38) verriegelbar oder selbstverriegelnd ausgelegt ist.

4. Relaisventil nach einem der Ansprüche 1 bis 3, wobei das Einstellelement (44) des Bewegungseinschränkungsmechanismus (38) von einer Antriebsvorrichtung (46) angetrieben und verriegelt wird, wobei die Antriebsvorrichtung vorzugsweise einen Elektromotor umfasst.

5. Relaisventil nach Anspruch 4, wobei
der Bewegungseinschränkungsmechanismus (38) ein Bewegungseinschränkungselement (40) umfasst und das Bewegungseinschränkungselement (40) einen Bewegungshub des Steuerkolbens (14) in Bezug zum Bewegungseinschränkungselement (40) vorsieht, der zumindest einem vollständigen Hub einer Axialbewegung des Steuerkolbens (14) entspricht.

6. Relaisventil nach einem der Ansprüche 1 bis 3, wobei das Einstellelement (44) des Bewegungseinschränkungsmechanismus (38) vom Steuerkolben (14) angetrieben wird und von einer Verriegelungsvorrichtung verriegelt wird, wobei die Verriegelungsvorrichtung vorzugsweise einen elektromagnetisch oder luftdruckgesteuerten Verriegelungsmechanismus umfasst.

7. Relaisventil nach Anspruch 6, wobei
der Bewegungseinschränkungsmechanismus (38) ein Bewegungseinschränkungselement (40) umfasst und das Bewegungseinschränkungselement (40) einen Bewegungshub des Steuerkolbens (14) in Bezug zum Bewegungseinschränkungselement (40) vorsieht, der maximal der Hälfte eines vollständigen Hubs einer Axialbewegung des Steuerkolbens (14) entspricht.

8. Luftdruckbremssystem, insbesondere für ein Nutzfahrzeug, mindestens ein Relaisventil (10) nach einem der vorstehenden Ansprüche umfassend.

9. Verfahren zum Steuern eines Relaisventils (10), einen Steuerkolben (14), der in einem Gehäuse (12) angeordnet und mittels eines von einem Steueranschluss (20) zugeführten Steuerdrucks axial beweglich ist, und eine Ventileinrichtung (24), die einen Ventilkörper (28) umfasst, der über eine Axialbewegung des Steuerkolbens (14) axial beweglich ist, wobei der Ventilkörper (28) die Fluidverbindung zwischen einem Zuführanschluss (26) und einem Auslassanschluss (22) steuert, umfassend, den folgenden Schritt umfassend:
gegebenenfalls Einschränken eines axialen Bewegungsbereichs des Steuerkolbens (14) über einen Bewegungseinschränkungsmechanismus (38),
**dadurch gekennzeichnet, dass**
die Grenzen des axialen Bewegungsbereichs des Steuerkolbens (14) eingestellt werden.

10. Verfahren nach Anspruch 9, wobei
ein axialer Bewegungsbereich des Steuerkolbens (14) in die eine Richtung und/oder die andere Richtung eingeschränkt wird.

11. Verfahren nach Anspruch 9 oder 10, wobei
der Bewegungseinschränkungsmechanismus (28) ein Bewegungseinschränkungselement (40) umfasst und nachdem ein gewünschter Ausgangsdruck erreicht wurde, das Bewegungseinschränkungselement (40) zu einer Position bewegt wird, an der sich der Steuerkolben (14) in einer Mittelposition befindet und der Steuerkolben (14) an eine Seite des Bewegungseinschränkungselements (40), die einem Auslassventilsitz (32) des Relaisventils (10) zugewandt ist, anschlägt, um den tatsächlichen Ausgangsdruck als Untergrenze einzustellen.

12. Verfahren nach einem der Ansprüche 9 bis 11, wobei der Bewegungseinschränkungsmechanismus (28) ein Bewegungseinschränkungselement (40) umfasst und nachdem ein gewünschter Ausgangsdruck erreicht wurde, das Bewegungseinschränkungselement (40) zu einer Position bewegt wird, an der sich der Steuerkolben (14) in einer Mittelposition befindet und der Steuerkolben (14) an eine Seite des Bewegungseinschränkungselements (40), die einem Einlassventilsitz (30) des Relaisventils (10) zugewandt ist, anschlägt, um den tatsächlichen Ausgangsdruck als Obergrenze einzustellen.

## Revendications

1. Soupape (10) de relais comprenant :
un piston (14) de commande monté dans une enveloppe (12) et mobile axialement au moyen d'une pression de commande envoyée d'un orifice (20) de commande;
un moyen (24) à soupape comprenant un corps (28) de soupape mobile axialement au moyen d'un déplacement axial du piston (14) de commande, le corps (28) de soupape commandant une communication fluidique entre un orifice (26) d'alimentation et un orifice (22) de sortie; et
un mécanisme (38) limitant le déplacement, configuré pour limiter la plage de déplacement axial du piston (14) de commande si cela est demandé,
**caractérisée en ce que**
le mécanisme (38) de limitation du déplacement comprend un élément (44) de réglage configuré pour régler la limitation de la plage de déplacement axial du piston (14) de commande.

2. Soupape de relais suivant la revendication 1, dans laquelle
le mécanisme (38) de limitation de déplacement est configuré pour limiter la plage de déplacement axial du piston (14) de commande dans un sens et/ou dans l'autre sens.

3. Soupape de relais suivant la revendication 1 ou 2, dans laquelle
l'élément (44) de réglage du mécanisme (38) de limitation du déplacement est configuré pour être verrouillable ou auto-verrouillant.

4. Soupape de relais suivant l'une quelconque des revendications 1 à 3, dans laquelle
l'élément (44) de réglage du mécanisme (38) de limitation du déplacement est entraîné et verrouillé par un dispositif (46) d'entraînement, lequel dispositif d'entraînement comprend de préférence un moteur électrique.

5. Soupape de relais suivant la revendication 4, dans laquelle
le mécanisme (38) de limitation du déplacement comprend un élément (40) de limitation du déplacement ; et
l'élément (40) de limitation du déplacement procure une course de déplacement du piston (14) de commande par rapport à l'élément (40) de limitation du déplacement, qui est au moins égale à une course complète du déplacement axial du piston (14) de commande.

6. Soupape de relais suivant l'une quelconque des revendications 1 à 3, dans laquelle
l'élément (44) de réglage du mécanisme (38) de limitation du déplacement est entraîné par le piston (14) de commande et verrouillé par un dispositif de verrouillage, lequel dispositif de verrouillage comprend de préférence un mécanisme de verrouillage électromagnétique ou commandé par une pression pneumatique.

7. Soupape de relais suivant la revendication 6, dans laquelle
le mécanisme (38) de limitation du déplacement comprend un élément (40) de limitation du déplacement; et
l'élément (40) de limitation du déplacement donne une course de déplacement du piston (14) de commande par rapport à l'élément (40) de limitation du déplacement, qui est de la moitié d'une course complète du déplacement axial du piston (14) de commande au maximum.

8. Système de frein à air comprimé, en particulier pour un véhicule utilitaire, comprenant au moins une soupape (10) de relais suivant l'une quelconque des revendications précédentes.

9. Procédé de commande d'une soupape (10) de relais comprenant un piston (14) de commande monté dans une enveloppe (12) et mobile axialement au moyen d'une pression de commande envoyée d'un orifice (20) de commande, et un moyen (24) à soupape comprenant un corps (28) de soupape mobile axialement au moyen d'un déplacement axial du piston (14) de commande, le corps (28) de soupape commandant une communication fluidique entre un orifice (26) d'alimentation et un orifice (22) de sortie, comprenant le stade dans lequel :
on limite la plage de déplacement axial du piston (14) de commande au moyen d'un mécanisme (38) de limitation du déplacement si cela est demandé,
**caractérisé en ce que**
on règle des limites de la plage de déplacement axial du piston (14) de commande.

10. Procédé suivant la revendication 9, dans lequel
on limite une plage de déplacement axial du piston (14) de commande dans un sens et/ou dans l'autre.

11. Procédé suivant la revendication 9 ou 10, dans lequel
le mécanisme (28) de limitation du déplacement comprend un élément (40) de limitation du déplacement; et
après avoir atteint une pression de sortie souhaitée, on met l'élément (40) de limitation du déplacement en une position où le piston (14) de commande est en position médiane et où le piston (14) de commande est en butée sur un côté de l'élément (40) de limitation du déplacement faisant face au siège (32) de soupape de sortie de la soupape (10) de relais pour régler la pression de sortie en cours comme une limite basse.

12. Procédé suivant l'une quelconque des revendications 9 à 11, dans lequel
le mécanisme (28) de limitation du déplacement compris un élément (40) de limitation du déplacement; et
après avoir atteint une pression de sortie souhaitée on met l'élément (40) de limitation de déplacement en une position où le piston (14) de commande est en position médiane et le piston (14) de commande est en butée sur un côté de l'élément (40) de limitation du déplacement qui fait face à un siège (30) de soupape d'entrée de la soupape (10) de relais pour régler la pression de sortie en cours comme une limite haute.
